# EUROPÄISCHE PATENTSCHRIFT

(11) **EP 2 496 871 B1**
(45) Veröffentlichungstag und Bekanntmachung des Hinweises auf die Patenterteilung: **04.07.2018**
(21) Anmeldenummer: 10774205.8
(22) Anmeldetag: 03.11.2010
(51) Int. Cl.: F16L 3/127, F16L 37/14, F16L 41/03, F24D 3/10

(54) **KOPPLUNGSSYSTEM, VERTEILER, ROHRSYSTEM UND ROHRVERSETZSYSTEM**
COUPLING SYSTEM, DISTRIBUTOR, PIPE SYSTEM AND PIPE MOVING SYSTEM
SYSTÈME DE RACCORDEMENT, DISTRIBUTEUR, SYSTÈME DE CONDUITES ET SYSTÈME DE MONTAGE EN DÉPORT DE CONDUITES

(30) Priorität: 05.11.2009 DE 202009015045 U
(43) Veröffentlichungstag der Anmeldung: 12.09.2012
(73) Patentinhaber: Uponor Innovation AB, 73061 Virsbo (SE)
(72) Erfinder: KERN-EMMERICH, Thomas, 97464 Niederwerrn (DE); KELLER, Jörg, 33611 Bielefeld (DE); GEIER, Rudolf, 97633 Sulzfeld (DE)
(74) Vertreter: Epping - Hermann - Fischer
(86) Internationale Anmeldenummer: PCT/EP2010/066749
(87) Internationale Veröffentlichungsnummer: WO 2011/054877

(56) Entgegenhaltungen:
- EP-A1- 0 582 354
- DE-B3-102004 034 686
- DE-B3-102006 026 263
- US-A- 3 127 199
- US-A- 4 611 834
- US-A- 5 490 694
- US-A1- 2003 234 536
- US-B1- 6 352 288

## Beschreibung

Im Rohrleitungsbau werden häufig Rohrleitung, so z.B. Heizungsrohre mittels Schweiß-, Löt- und/oder Presstechniken miteinander gekoppelt. Dabei kommen unterschiedliche Verbindungselemente, so z.B. Fittinge oder Formstücke zum Einsatz, die auch eine hydraulische Kopplung der Rohrleitungen miteinander ermöglichen. Die Rohrleitungen sind dabei beispielsweise als Stahl-, Kupfer- oder Kunststoffrohre ausgebildet.

DE 10 2008 027 382 beschreibt beispielsweise ein modulares Koppelsystem, in dem Basiskörper mit einem Pressfitting gekoppelt werden. Der Pressfitting ist dazu ausgebildet, direkt mit Rohrleitungen gekoppelt zu werden.

WO 2006/007944 A1 zeigt einen Stützkörper, der dazu dient, zwei Rohre miteinander hydraulisch zu koppeln. Dabei ist der Stützkörper an seinem jeweiligen Ende nur direkt mit einem Rohr koppelbar.

US 3,127,199 zeigt ein mehrteiliges Fitting zum Schnellen und lösbaren Verbinden von zwei oder mehreren Rohren. Das Fitting umfasst einen Fittingkörper mit einer zentralen Kammer, in die die Rohre eingeschoben werden können. Zur axialen Fixierung der Rohre ist der Fittingkörper mit einer äußeren Öffnung versehen, durch welche ein Verriegelungselement geführt werden kann. Verriegelungselemente zur Rohrverbindung sind ebenfalls in US 2003/0234536 A1 gezeigt.

Es ist Aufgabe der Erfindung ein Kopplungssystem, einen Verteiler, ein Rohrsystem und ein Rohrversetzsystem zu schaffen, das jeweils flexibel einsetzbar ist und möglichst einfach realisierbar ist.

Die Aufgabe wird gelöst durch die Merkmale der unabhängigen Schutzansprüche. Weitere Ausgestaltungen der Erfindung sind Gegenstand der Unteransprüche.

Gemäß einem ersten Aspekt umfasst ein Kopplungssystem einen ersten Basiskörper und einen zweiten Basiskörper. Beide weisen jeweils einen Durchlass für ein Fluid und jeweils eine innenliegende vorgegebene Umfangsvertiefung und jeweils eine Arretierungsfläche auf. Das Kopplungssystem umfasst ferner ein Adapterstück mit einer Längsachse und mit einem axial verlaufenden Durchlass für das Fluid und mit einem ersten Ende und mit einem gegenüberliegenden zweiten Ende. Das erste Ende weist zumindest eine vorgegebene erste Umfangsvertiefung auf, die zumindest teilweise entlang eines Umfangs des ersten Endes verläuft. Das zweite Ende weist zumindest eine vorgegebene zweite Umfangsvertiefung auf, die zumindest teilweise entlang eines Umfangs des zweiten Endes verläuft. Der erste Basiskörper ist dem ersten Ende des Adapterstücks und der zweite Basiskörper ist dem zweiten Ende des Adapterstücks zugeordnet. In einem ineinandergeschobenen Zustand sind die dem jeweiligen Ende des Adapterstücks zugeordnete Umfangsvertiefung und die innenliegende Umfangsvertiefung des jeweiligen Basiskörpers gegenüberliegend und bilden einen Aufnahmeraum. Der erste und zweite Basiskörper weisen jeweils zumindest einen ersten und einen zweiten Zugangsraum auf, wobei der jeweilige Zugangsraum sich zwischen einer Außenfläche des jeweiligen Basiskörpers und dem jeweiligen Aufnahmeraum erstreckt, wobei der erste Zugangsraum einem Ende des jeweiligen Aufnahmeraums und der zweite Zugangsraum einem entgegengesetzten Ende des jeweiligen Aufnahmeraums zugeordnet ist. Darüber hinaus weist das Kopplungssystem zumindest zwei Verriegelungselemente auf. Ein der zumindest zwei Verriegelungselemente ist durch den jeweils ersten oder zweiten Zugangsraum in den jeweiligen Aufnahmeraum schiebbar. Das jeweilige Verriegelungselement weist ein Arretierungselement mit einer Arretierungsnase auf. Das Arretierungselement greift an die Arretierungsfläche des jeweiligen Basiskörpers an zur Verhinderung eines unbeabsichtigten Herausgleitens des jeweiligen Verriegelungselements aus dem zugeordneten Aufnahmeraum.

Ein derartiges Kopplungssystem ermöglicht eine besonders flexible Kopplung von Rohren mittels der Basiskörper und dem Adapterstück, wobei das Adapterstück nicht direkt mit den Rohren koppelbar ist, sondern nur der jeweilige Basiskörper direkt mit einem Rohr koppelbar ist. Das Adapterstück ermöglicht eine Kopplung mit dem jeweiligen Basiskörper und eine zerstörungsfreie Entkoppelung. Das Adapterstück kann beispielsweise nur das erste und zweite Ende aufweisen und ist in dieser Form ausgebildet, zwei Rohre, so z.B. Kunststoffrohre, mittels der zugeordneten Basiskörper miteinander hydraulisch zu koppeln. Das modulare Kopplungssystem hat den Vorteil, dass Basiskörper, die beispielsweise als Verteilerkörper oder Rohranschlusskörper ausgebildet sind, besonders einfach miteinander koppelbar sind.

Weist das Adapterstück beispielsweise eine vorgegebene Länge auf, so z.B. 170 mm für einen Nenndurchmesser kleiner als 90 mm oder 250 mm für einen Nenndurchmesser größer oder gleich 90 mm, so können die Basiskörper mittels des Adapterstücks auch vorgegeben axial beabstandet werden.

Um eine hohe Druckfestigkeit zu ermöglichen, weist das Adapterstück und/oder der jeweilige Basiskörper eine Dicke einer jeweiligen Wandung zwischen 6 und 10 mm auf. Dies ermöglicht eine Druckfestigkeit von beispielsweise 10 bar. Das Adapterstück und/oder die zugeordneten Basiskörper oder zumindest deren jeweils mit dem Fluid in Berührung kommenden Bereiche sind aus einem wärmebeständigen Material, so z.B. PPSU, gefertigt oder ummantelt, und ermöglichen somit einen Transport eines beispielsweise auf 110 °C erwärmten Fluids. Ferner ist das verwendete Material auch zum Transport von Trinkwasser geeignet, ohne diesem Schadstoffe hinzuzufügen. Das Adapterstück und/oder der jeweilige Basiskörper können beispielsweise aus Vollkunststoff oder aus einem Mehrschichtverbund hergestellt sein, wobei das Adapterstück in diesem Fall auch Metall, so z.B. Messing oder Aluminium, umfassen kann.

Der jeweilige Aufnahmeraum kann (teil-)ringförmig sein. Umso größer ein Umfangswinkel ist, über den sich der Aufnahmeraum entlang des Umfangs des jeweiligen Endes erstreckt, umso mehr können Kippbewegungen, die zwischen dem Adapterstück und dem jeweiligen Basiskörper wirken, reduziert werden. So kann sich der Aufnahmeraum beispielsweise entlang eines Umfangswinkels von mehr als 180° und insbesondere von bis zu 300° erstrecken. Auch schraubenlinienförmige Verläufe des jeweiligen Aufnahmeraums sind möglich, in denen sich der jeweilige Aufnahmeraum über einen Umfangswinkel von mehr als 360° erstrecken kann.

Das Verriegelungselement weist an einem seiner gegenüberliegenden Enden das Arretierungselement auf, das insbesondere mit der am Basiskörper ausgebildeten Arretierfläche angreift, was beispielsweise durch eine Verhakung oder ein anderes Ineinandergreifen beider Elemente erfolgt. Dadurch kann ein Herausrutschen des Verriegelungselements aus dem Aufnahmeraum bzw. eine Bewegung des Verriegelungselements relativ zum Aufnahmeraum verhindert werden.

Das Arretierungselement kann auch zur Handhabung des Verriegelungselements beim Hineinschieben in den Aufnahmeraum genutzt wird. Dies kann entweder direkt durch manuelles Ausüben von Druck mit beispielsweise der Hand auf das Arretierungselement realisiert werden. Alternativ oder zusätzlich ist es möglich, dass ein Werkzeug verwendet wird. Zusätzlich ist es von Vorteil, wenn das Arretierungselement auch eine Handhabe, insbesondere eine Öffnung, eine Vertiefung oder eine Erhebung zum Ansetzen eines Ziehwerkzeuges aufweist, mit dem sich das Verriegelungselement bei Bedarf wieder aus dem Aufnahmeraum herausziehen lässt.

Das jeweilige Verriegelungselement wird typischerweise in dem jeweiligen Aufnahmeraum durch Kontakt mit deren Begrenzungsfläche geführt. Somit kann das Verriegelungselement bei Einwirkung von Schubkräften dann, wenn es sich in zumindest dem Zugangsraum befindet, nicht mehr seitlich ausweichen und lässt sich damit weiter in den Aufnahmeraum einführen, bis es sich zumindest teilweise entlang des Aufnahmeraums hinweg erstreckt und somit seine Verriegelungsfunktion übernehmen kann. Dabei kann das jeweilige Verriegelungselement einen Querschnitt des zugeordneten Aufnahmeraums beispielsweise in etwa ganz ausfüllen.

Um eine Begrenzung des Ineinanderschiebens zu erreichen und somit die jeweilige Umfangsvertiefung des Adapterstücks und die zugeordnete innenliegende Umfangsvertiefung gegenüber anzuordnen, kann das Adapterstück zumindest ein teilringförmiges Zwischenelement aufweisen, das beispielsweise auf den jeweiligen Basiskörper wirkt, wenn es weit genug über das jeweilige Ende des Adapterstücks geschoben wurde. Dabei weist das zumindest eine Zwischenelement des Adapterstücks einen vorgegebenen axialen Abstand zu der an dem zugeordneten Ende angeordneten Umfangsvertiefung auf.

In einer Ausgestaltung des ersten Aspekts weist das Adapterstück einen Befestigungsbereich auf mit einem scheibenförmigen ersten Kranz und einem scheibenförmigen zweiten Kranz. Der erste Kranz und der zweite Kranz verlaufen zumindest teilweise entlang des Umfangs des Adapterstücks zwischen dem ersten und zweiten Ende. Der erste Kranz weist einen vorgegebenen axialen Abstand zu dem zweiten Kranz und einen vorgegebenen axialen Abstand zu der ersten Umfangsvertiefung auf. Der zweite Kranz weist einen vorgegebenen axialen Abstand zu der zweiten Umfangsvertiefung auf. Der Befestigungsbereich dient dazu, eine Fixierschelle an dem Adapterstück anzubringen und zwar derart, dass durch die beiden Kränze eine axiale Verschiebung des Adapterstücks verhindert werden kann. Dadurch kann das Kopplungssystem einfach und zuverlässig befestigt werden, so z.B. an einer Wand. Der Befestigungsbereich kann auch als Taillierung des Adapterstücks ausgebildet sein. In diesem Fall kann beispielsweise ein mittiger Bereich des Befestigungsbereiches einen kleineren Durchmesser aufweisen als beispielsweise ein Durchmesser des ersten und/oder zweiten Endes des Adapterstücks. Dabei kann das zumindest eine Zwischenelement auch zwischen der ersten bzw. zweiten Umfangsvertiefung und dem ersten bzw. zweiten Kranz angeordnet sein.

In einer weiteren Ausgestaltung des ersten Aspekts erstreckt sich die erste und/oder zweite Umfangsvertiefung des Adapterstücks jeweils entlang eines Umfangwinkels von etwa 270°. Dies ermöglicht eine besonders zuverlässige Kopplung des jeweiligen Basiskörpers mit dem Adapterstück durch das jeweilige Verriegelungselement.

In einer weiteren Ausgestaltung des ersten Aspekts weist das erste Ende und/oder das zweite Ende des Adapterstücks und/oder der ersten Basiskörper und/oder zweite Basiskörper jeweils zumindest ein Dichtelement auf. Dies trägt zu einer zuverlässigen hydraulischen Dichtigkeit zwischen dem jeweiligen Basiskörper und dem Adapterstück bei. Dadurch kann verhindert werden, dass Fluid aus dem Bereich zwischen den ineinandergeschobenen Kontaktflächen austritt, und dass Fluid bis in den Bereich des Aufnahmeraums hineingelangt. Das zumindest eine Dichtelement kann beispielsweise als ringförmiges Dichtelement, so z.B. als Dichtring, ausgebildet sein.

Der erste und zweite Basiskörper weisen jeweils zumindest einen ersten und einen zweiten Zugangsraum auf. Der jeweilige Zugangsraum erstreckt sich zwischen einer Außenfläche des jeweiligen Basiskörpers und dem jeweiligen Aufnahmeraum. Der erste Zugangsraum ist einem Ende des jeweiligen Aufnahmeraums und der zweite Zugangsraum ist einem entgegengesetzten Ende des jeweiligen Aufnahmeraums zugeordnet. Dies ermöglicht ein einfaches Einführen des jeweiligen Verriegelungselementes entweder durch den ersten Zugangsraum oder durch den zweiten Zugangsraum in den zugeordneten Aufnahmeraum. Der jeweilige Zugangsraum mündet dabei im Wesentlichen stetig, d. h. im wesentlichen vorsprungslos in den Aufnahmeraum ein. Der jeweilige Zugangsraum kann tangential in den zugeordneten Aufnahmeraum einmünden. Der jeweilige Zugangsraum kann als Bohrung ausgebildet sein.

In einer weiteren Ausgestaltung des ersten Aspekts umfasst das jeweilige Verriegelungselement Kunststoff und/oder Metall und/oder ist als Schnur, als flexible Welle, als Kette oder als Litze ausgebildet. Dadurch kann ein flexibles, im Wesentlichen inkompressibles Verrieglungselement realisiert werden, das eine zuverlässige und lösbare oder wiederlösbare Kopplung ermöglicht.

In einer weiteren Ausgestaltung des ersten Aspekts erstreckt sich der Aufnahmeraum über einen Umfangswinkel von etwa 270°. Der erste und zweite Zugangsraum enden außen an dem jeweiligen Basiskörper in zwei in etwa rechtwinkelig zu einander angeordneten Außenflächen, von denen eine die Arretierungsfläche ist. Wenn das Verriegelungselement vollständig in die Zugangsräume und den Aufnahmeraum eingeschoben ist, befindet sich das Arretierungselement zwischen den beiden Außenflächen, wobei das Arretierungselement mit dem Rand der Öffnung desjenigen der beiden Zugangsräume zwecks Arretierung zusammenwirkt, in dem sich das dem Arretierungselement abgewandte Ende des Verriegelungselements befindet.

Gemäß einem zweiten Aspekt umfasst ein Verteiler zumindest ein Kopplungssystem gemäß dem ersten Aspekt. Dabei sind der erste und zweite Basiskörper jeweils als Fluidverteilerkörper ausgebildet. Dadurch kann der Verteiler besonders einfach realisiert werden. Ferner können ein oder mehrere Fluidverteilerkörper einfach dem Verteiler hinzugefügt oder von diesem entfernt werden. Dadurch ermöglicht das Kopplungssystem einen flexiblen Einsatz.

Gemäß einem dritten Aspekt umfasst ein Rohrsystem zumindest ein Kopplungssystem gemäß dem ersten Aspekt. Dabei sind der erste und zweite Basiskörper mit jeweils einem vorgegebenen Rohr hydraulisch gekoppelt. Das Rohrsystem ist dabei mittels zumindest einer Fixierschelle fixierbar. Die Fixierschelle greift an den Befestigungsbereich des jeweiligen Adapterstücks an. Dadurch kann eine axiale Verschiebung des Rohres im befestigten Zustand verhindert werden. Wird das Rohrsystem beispielsweise vertikal befestigt, so z.B. als Strangleitungssystem, so kann durch die an dem jeweiligen Befestigungsbereich wirkende Fixierschelle zumindest teilweise ein Gewicht des Rohrsystems zuverlässig aufgenommen werden.

In einer Ausgestaltung des dritten Aspekts ist der erste und/oder zweite Basiskörper jeweils als Winkelstück ausgebildet. Dies ermöglicht auf einfache und flexible Weise einen vorgegebenen Versatz der Rohre in unterschiedliche Rohr-Installationsebenen.

Gemäß einem vierten Aspekt umfasst ein Rohrversetzsystem zumindest ein Kopplungssystem gemäß dem ersten Aspekt. Dabei ist der erste und zweite Basiskörper jeweils als 45°-Winkelkörper ausgebildet. Der erste Basiskörper ist einer ersten Rohr-Installationsebene und der zweite Basiskörper ist einer zweiten Rohr-Installationsebene zugeordnet. Das Adapterstück weist eine vorgegebene Länge auf. Dadurch kann ein vorgegebener Versatz der Rohr-Installationsebenen einfach und schnell realisiert werden.

Ausführungsbeispiele der Erfindung sind im Folgenden anhand der schematischen Zeichnungen näher erläutert. Es zeigen:
- Fig. 1, 2: Adapterstück verschiedener Länge,
- Fig. 3, 4: Verriegelungsmechanismus eines Kopplungssystems,
- Fig. 5: Verteiler,
- Fig. 6: Rohrsystem,
- Fig. 7: Rohrversetzsystem.

Elemente gleicher Konstruktion oder Funktion sind figurenübergreifend mit den gleichen Bezugszeichen versehen.

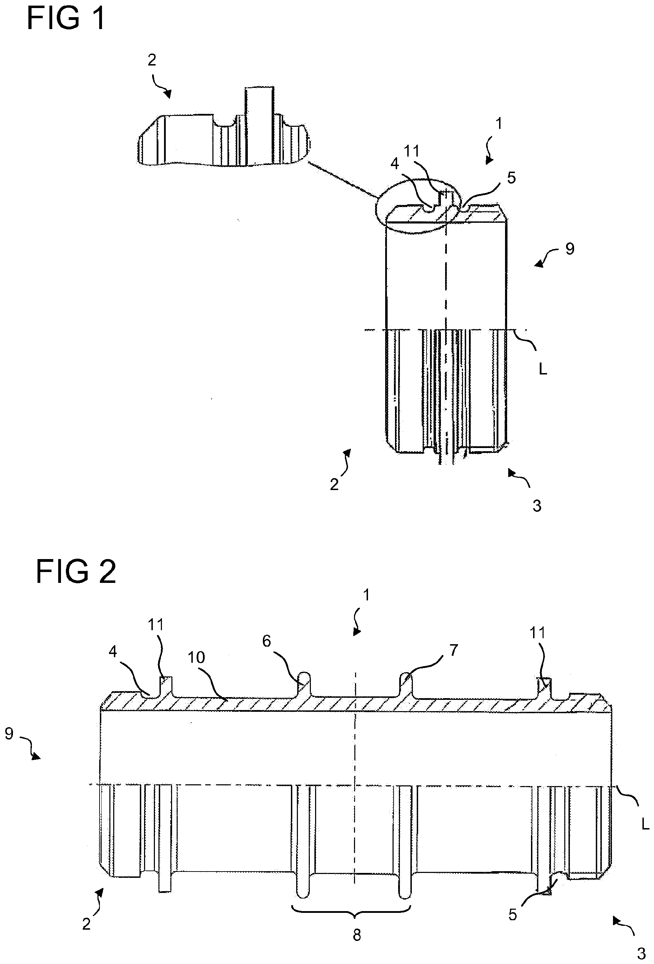

Figur 1 und 2 zeigen jeweils ein Adapterstück 1 mit unterschiedlichen Längen. Das Adapterstück 1 weist eine Längsachse L auf und einen axialen Durchlass 9 für ein Fluid, so z.B. Wasser. Das Adapterstück 1 kann beispielsweise Kunststoff und/oder Metall, so z.B. Messing oder Aluminium, umfassen und beispielsweise einen Durchmesser zwischen 63 und 110 mm aufweisen. Dabei kann beispielsweise eine Länge des Adapterstücks 1 für Durchmesser unter 90 mm in etwa 170 mm und für Durchmesser größer oder gleich 90 mm in etwa 250 mm betragen. Grundsätzlich sind auch Längen von unter 170 mm möglich, so z.B. 45 mm. Das Adapterstück 1 weist ein erstes Ende 2 und ein gegenüberliegendes zweites Ende 3 auf. Das erste Ende 2 kann zumindest eine erste Umfangsvertiefung 4 und das zweite Ende 3 kann zumindest eine zweite Umfangsvertiefung 5 aufweisen. Die jeweilige Umfangsvertiefung 4, 5 kann zumindest teilringförmig um einen Umfang des jeweiligen Endes 2, 3 verlaufen und weist eine vorgegebene Form auf, so z.B. eine Tiefe zwischen 3 und 5 mm. Zwischen der ersten und zweiten Umfangsvertiefung 4, 5 kann zumindest ein scheibenförmiges Zwischenelement 11 vorgesehen sein, das einen vorgegebenen axialen Abstand, so z.B. 1,8 mm, zu der jeweiligen Umfangsvertiefung 4, 5 aufweist. Eine axiale Ausdehnung des zumindest einen Zwischenelementes 11 kann beispielsweise 4 mm betragen. In Fig. 2 sind beispielsweise zwei Zwischenelemente 11 dargestellt.

Ferner kann das Adapterstück 1 einen Befestigungsbereich 8 aufweisen, der einen scheibenförmigen ersten Kranz 6 und einem scheibenförmigen zweiten Kranz 7 aufweist (Figur 2). Der erste Kranz 6 und der zweite Kranz 7 verlaufen zumindest teilringförmig entlang des Umfangs des Adapterstücks 1 zwischen dem ersten und zweiten Ende 2, 3. Der erste Kranz 6 weist einen vorgegebenen axialen Abstand zu dem zweiten Kranz 7 und einen vorgegebenen axialen Abstand zu der ersten Umfangsvertiefung 4 auf. Der zweite Kranz 7 weist einen vorgegebenen axialen Abstand zu der zweiten Umfangsvertiefung 5 auf. Bei einem entsprechenden langen Adapterstück 1 kann der erste und zweite Kranz 6, 7 auch zwischen zwei Zwischenelementen 11 axial beabstandet angeordnet sein (Figur 2).

Um eine hohe Druckfestigkeit zu ermöglichen, weist das Adapterstück 1 und/oder der jeweilige Basiskörper 21 eine Dicke einer jeweiligen Wandung 10 zwischen 6 und 10 mm auf. Dies ermöglicht beispielsweise eine Druckfestigkeit von bis zu 10 bar. Das Adapterstück 1 und/oder der jeweilige Basiskörper 21 oder zumindest deren jeweils mit dem Fluid in Berührung kommenden Bereiche sind aus einem wärmebeständigen Material, so z.B. PPSU, gefertigt oder ummantelt, und ermöglichen somit einen Transport eines beispielsweise auf 110 °C erwärmten Fluids. Ferner ist das verwendete Material auch zum Transport von Trinkwasser geeignet.

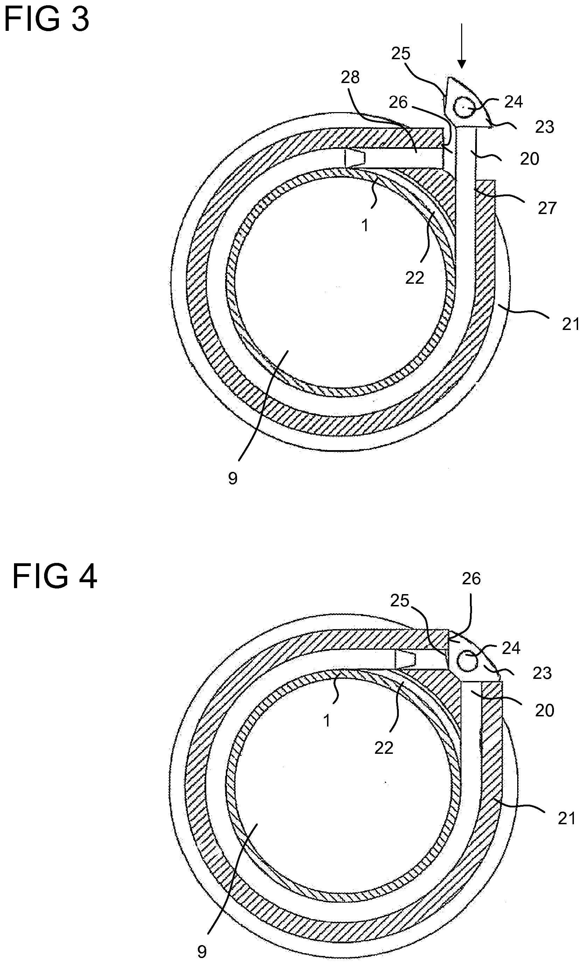

In den Figuren 3 und 4 ist ein Verriegelungsmechanismus im Querschnitt dargestellt. Zum einen ist ein Basiskörper 21 im Querschnitt dargestellt, dass ein Ende des ersten und zweiten Endes 2, 3 des Adapterstücks 1 umgibt. Der Basiskörper 21 weist eine innenliegende Umfangsvertiefung auf.

Der Basiskörper 21 und das Adapterstück 1 weisen ineinanderschiebbare Kontaktflächen auf, die beispielsweise zylindrisch ausgebildet sind. Die Kontaktfläche des Basiskörpers 21 wird durch einen Teil der Innenseite einer Wandung des Basiskörpers 21 gebildet, während die Kontaktfläche des Adapterstücks 1 durch einen Teil einer Außenfläche des Adapterstücks 1 gebildet wird.

In einem ineinandergeschobenen Zustand des Adapterstücks 1 in den Basiskörper 21 sind die innenliegende Umfangsvertiefung des Basiskörpers 21 und die zugeordnete Umfangsvertiefung 4, 5 des Adapterstücks 1 in etwa gegenüberliegend und bilden einen Aufnahmeraum 22. Der Aufnahmeraum 22 kann sich über einen Umfangswinkel von 270° erstrecken.

Der Basiskörper 21 und das Adapterstück 1 können durch ein Verriegelungselement 20 miteinander mechanisch koppelt werden. Je nach den aufzubringenden Haltekräften kann es erforderlich sein, mehrere flexible, im Wesentlichen inkompressible und strangförmige Verriegelungselemente 20 vorzusehen, wobei dann auch mehrere Aufnahmeräume 22 vorhanden sind. Die mehreren Aufnahmeräume 22 können sich in unterschiedlichen Umfangswinkelbereichen erstrecken, so dass eine Verriegelung durch mehrere Verriegelungselemente 20 über den gesamten Umfang gegeben ist.

Der Basiskörper 21 ist mit einem Vorsprung an seiner jeweiligen Außenfläche versehen, der sich tangential zu dem Aufnahmeraum 22 erstreckt. Durch den jeweiligen Vorsprung hindurch erstreckt sich jeweils ein Zugangsraum 27, 28. Die Zugangsräume 27, 28 enden in den (Stirn-)Flächen, die spitz- oder stumpfwinklig oder, wie in diesem Ausführungsbeispiel, rechtwinklig zueinander verlaufen und nur einen geringen Abstand voneinander aufweisen. Das Verriegelungselement 20 weist ein gekrümmtes vorderes Ende mit einer kegelstumpfförmigen Spitze auf und ist an seinem der Spitze gegenüberliegenden Ende mit einem Arretierungselement 23 versehen. Das Verriegelungselement 20 kann beispielsweise einstückig ausgebildet sein.

Das Verriegelungselement 20 wird mit seinem gekrümmten Ende beispielsweise in den Zugangsraum 27 eingeführt (Figur 3). Beim Hineinschieben des Verriegelungselements 20 in den Zugangsraum 27 und den Aufnahmeraum 22 kann mit der Hand über das verbreiterte, das Arretierungselement 23 aufweisende Ende des Verriegelungselements 20 Druck auf dieses ausgeübt werden. Wenn das Verriegelungselement 20 auf diese Weise nahezu vollständig eingeschoben ist, ergibt sich die Situation gemäß Figur 4. Hier greift das Arretierungselement 23 mit einer Arretierungsnase 25 in eine Zugangsöffnung der Fläche, die auch als Arretierungsfläche 26 bezeichnet werden kann, des Vorsprungs ein. Das Arretierungselement 23 füllt nun den Freiraum zwischen den beiden (Stirn-)Flächen aus und liegt damit an der Außenfläche des Basiskörpers 21 an. Die Arretierungsnase 25 verhindert, dass sich das Arretierungselement 23 lösen und damit das Verriegelungselement 20 aus dem Aufnahmeraum 22 rutschen kann.

Die mechanische Kopplung des Adapterstücks 1 mit dem Basiskörper 21 erfolgt durch das zumindest eine flexible, im Wesentlichen inkompressible, strangförmige Verriegelungselement 20, wenn sich dieses in dem zugeordneten Aufnahmeraum 22 befindet. Dabei reicht es aus, wenn sich das jeweilige Verriegelungselement 20 ausschließlich in diesem Aufnahmeraum 22 befindet. Eine Erstreckung des jeweiligen Verriegelungselements 20 bis in einen oder gar beide Zugangsräume 27, 28 ist zur Realisierung des Verriegelungsmechanismus nicht erforderlich. Im gekoppelten Zustand ist eine axiale Verschiebung des jeweiligen gekoppelten Basiskörpers relativ zu dem mit diesem gekoppelten Adapterstück im Wesentlichen nicht mehr möglich.

Wie anhand der Figuren 3 und 4 zu erkennen ist, kann das Arretierungselement 23 eine quer zur Erstreckung des Verriegelungselements 20 verlaufende Öffnung 24 oder eine Vertiefung aufweisen, die genutzt werden kann, um an dem Arretierungselement 23 Schub- oder Zugkräfte angreifen lassen zu können. Beispielsweise kann man durch die Öffnung 24 einen Stab oder dergleichen stecken, der dann als Handhabe und als Griff dient, um durch Ausübung der Schub- oder Zugkräfte das Verriegelungselement 20 in den jeweiligen Aufnahmeraum 22 hineinzuschieben oder aus dem jeweiligen Aufnahmeraum 22 herauszuziehen.

Außen um das jeweilige Ende 2, 3 des Adapterstücks 1 kann zumindest ein ringförmiges Dichtelement vorgesehen sein, das die einander gegenüberliegenden Kontaktflächen des Adapterstücks 1 und des jeweiligen Basiskörpers 21 gegeneinander hydraulisch abdichtet. Das zumindest eine Dichtelement kann alternativ oder zusätzlich auch an einer Innenfläche des Basiskörpers 21 angeordnet sein.

Jedem Ende 2, 3 des Adapterstücks 1 ist ein jeweiliger Basiskörper 21 zugeordnet, der unterschiedlich ausgeführt sein kann. Das Adapterstück 1 ist somit ausgebildet, lediglich Basiskörper 1 miteinander hydraulisch zu koppeln, die den anhand der Figuren 3 und 4 beschriebenen Verriegelungsmechanismus ermöglichen. Das Adapterstück 1 mit den jeweils zugeordneten beiden Basiskörpern kann als Kopplungssystem bezeichnet werden.

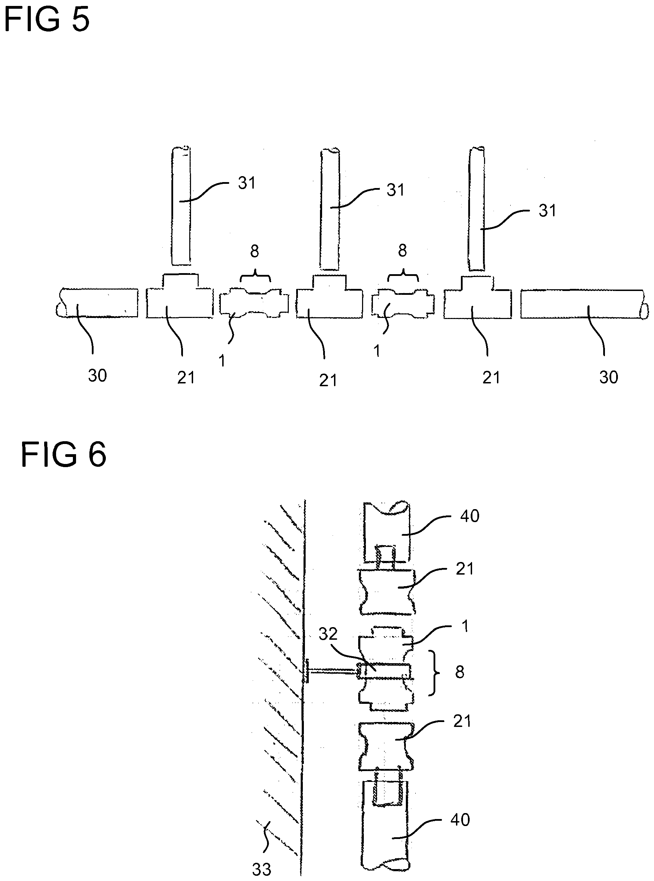

In Figur 5 ist ein Verteiler dargestellt, der zwei Kopplungssysteme mit jeweils einem Adapterstück 1 umfasst. Der jeweilige Basiskörper 21 ist als Fluidverteilerkörper ausgebildet und umfasst drei Anschlüsse, wobei auch mehr Anschlüsse möglich sind. Zwei Basiskörper 21 umfassen jeweils zwei Rohranschlüsse und sind über diese mit den Rohren 30 und den Abgangsrohren 31 hydraulisch koppelbar. Ferner weisen diese beiden Basiskörper 1 jeweils einen Anschluss für das jeweilige Adapterstück 1 auf.

Ein weiterer Basiskörper 21 umfasst einen Rohranschluss, der eine hydraulische Kopplung mit dem Abgangsrohr 31 ermöglicht. Ferner weist der weitere Basiskörper 21 zwei Anschlüsse für jeweils ein Adapterstück 1 auf. Es können auch mehr oder weniger Kopplungssysteme für den Verteiler verwendet werden. Das Adapterstück 1 ermöglicht somit eine einfache und schnelle hydraulische Kopplung zwischen den Basiskörpern 21 und somit eine flexible Realisierung eines Verteilers zur Verteilung des Fluids. Der Verteiler kann mittels der Befestigungsbereiche beispielsweise an einer Wand fixiert werden. Darüber hinaus ist es möglich, dass der jeweilige Basiskörper 21 auch ein Ventil umfasst, um beispielsweise eine Abgabe einer Fluidmenge in die Abgangsrohre 31 vorzugeben.

Die Rohre 30 und/oder die Abgangsrohre 31 können beispielsweise mittels Presstechnik mit dem jeweiligen Basiskörper 21 gekoppelt sein, wobei auch Schweiß- oder Löttechniken anwendbar sind.

In Figur 6 ist ein Rohrsystem dargestellt mit einem Kopplungssystem. Die beiden Basiskörper 21 sind jeweils als Rohranschlusskörper ausgebildet und weisen jeweils einen Anschluss für das Adapterstück 1 und einen Anschluss für ein Rohr 40 auf, wobei auch hier das jeweilige Rohr 40 mit dem jeweiligen Basiskörper 21 mittels Presstechnik gekoppelt sein kann, wobei auch Schweiß- oder Löttechniken anwendbar sind. Das Rohrsystem kann mehrere Kopplungssysteme umfassen.

Das Rohrsystem ist mittels einer oder mehreren Fixierschellen 32 an einer Wand 33 befestigt. Dabei greift die jeweilige Fixierschelle 32 an den Befestigungsbereich 8 des jeweiligen Adapterstücks 1 an. Der Befestigungsbereich 8 ist in Figur 6 beispielsweise als taillierter Bereich ausgebildet, kann aber zusätzlich oder alternativ auch den ersten und zweiten Befestigungskranz 6, 7 (Figur 2) aufweisen. Es ist auch möglich, nur einen Kranz vorzusehen, der in Figur 6 oberhalb der Fixierschelle 32 anbringbar wäre.

Der Befestigungsbereich 8 des jeweiligen Adapterstücks 1 hat den Vorteil, dass das Rohrsystem im Wesentlichen nicht axial verschiebbar ist. Ist das Rohrsystem wie in Figur 6 dargestellt vertikal angeordnet, ermöglicht der Befestigungsbereich 8 eine zuverlässige Befestigung mittels der Fixierschelle 32, die dadurch zumindest einen Teil eines Gewichts des Rohrsystems aufnehmen kann.

Die Basiskörper 21 können jeweils auch als Winkelkörper ausgebildet sein und als solche das Adapterstück 1 mit dem jeweiligen Rohr 40 hydraulisch koppeln.

In einer besonderen Ausführungsform als Rohrversetzsystem sind die beiden Basiskörper 21 des Kopplungssystems als 45°-Winkelkörper ausgebildet. Das Rohrversetzsystem ist ausgebildet, ein erstes Rohr 41 und ein zweites Rohr 42 miteinander hydraulisch zu koppeln. Beide Basiskörper 21 umfassen jeweils einen Anschluss für das Adapterstück 1 und einen Anschluss für das jeweilige Rohr 41, 42, wobei auch hier das jeweilige Rohr 41, 42 mit dem jeweiligen Basiskörper 21 mittels Presstechnik gekoppelt sein kann. Das Versetzrohrsystem kann mehrere Kopplungssysteme umfassen. Das Adapterstück 1 umfasst eine vorgegebene Länge, so z.B. 170 mm oder 250 mm in Abhängigkeit von dem jeweiligen Durchmesser. Das Adapterstück 1 mit den beiden zugeordneten 45°-Winkelkörpern ermöglicht einen vorgegebenen Versatz OFFS zwischen einer dem ersten Rohr 41 zugeordneten Rohr-Installationsebene IL1, so z.B. direkt unter einer Gebäudedecke, und einer dem zweiten Rohr 42 zugeordneten Rohr-Installationsebene IL2, so z.B. vertikal beabstandet zu der Gebäudedecke.

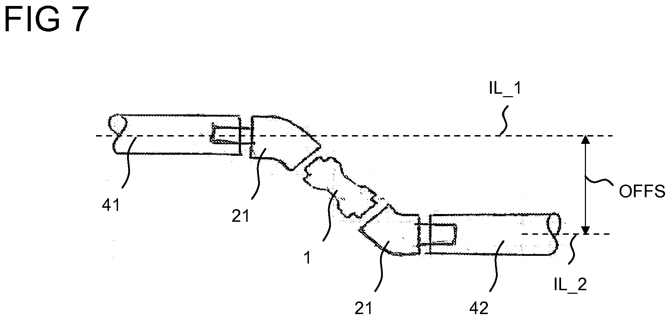

Die in den Figuren 5 bis 7 dargestellten Rohre können beispielsweise als Kunststoff- oder Mehrschichtverbundrohre ausgebildet sein. Auch Metallrohre sind verwendbar.

### Bezugszeichenliste

- 1: Adapterstück
- 2: erstes Ende
- 3: zweites Ende
- 4: erste Umfangsvertiefung
- 5: zweite Umfangsvertiefung
- 6: erster Kranz
- 7: zweiter Kranz
- 8: Befestigungsbereich
- 9: Durchlass
- 10: Wandung
- 11: Zwischenelement
- 20: Verriegelungselement
- 21: Basiskörper
- 22: Aufnahmeraum
- 23: Arretierungselement
- 24: Öffnung
- 25: Arretierungsnase
- 26: Arretierungsfläche
- 27: erster Zugangsraum
- 28: zweiter Zugangsraum
- 30, 31, 40, 41, 42: Rohr
- 32: Fixierschelle
- 33: Wand
- IL1: erste Rohr-Installationsebene
- IL2: zweite Rohr-Installationsebene
- OFFS: Versatz

## Patentansprüche

1. Kopplungssystem zur Kopplung von Rohren mittels Basiskörpern und einem Adapterstück, mit
- einem ersten Basiskörper (21) und einem zweiten Basiskörper (21), wobei beide jeweils einen Durchlass für ein Fluid und jeweils eine innenliegende vorgegebene Umfangsvertiefung und jeweils eine Arretierungsfläche (26) aufweisen,
- dem Adapterstück (1) mit einer Längsachse (L) und mit einem axial verlaufenden Durchlass (9) für das Fluid und mit einem ersten Ende (2) und mit einem gegenüberliegenden zweiten Ende (3), wobei das erste Ende (2) zumindest eine vorgegebene erste Umfangsvertiefung (4) aufweist, die zumindest teilweise entlang eines Umfangs des ersten Endes (2) verläuft, und das zweite Ende (3) zumindest eine vorgegebene zweite Umfangsvertiefung (5) aufweist, die zumindest teilweise entlang eines Umfangs des zweiten Endes (3) verläuft, wobei der erste Basiskörper (21) dem ersten Ende (2) des Adapterstücks (1) und der zweite Basiskörper (21) dem zweiten Ende (3) des Adapterstücks (1) zugeordnet ist, wobei in einem ineinandergeschobenen Zustand die dem jeweiligen Ende (2, 3) des Adapterstücks (1) zugeordnete Umfangsvertiefung (4, 5) und die innenliegende Umfangsvertiefung des jeweiligen Basiskörpers (21) gegenüberliegend sind und einen Aufnahmeraum (22) bilden, wobei der erste und zweite Basiskörper (21) jeweils zumindest einen ersten und einen zweiten Zugangsraum (27, 28) aufweisen, wobei der jeweilige Zugangsraum (27, 28) sich zwischen einer Außenfläche des jeweiligen Basiskörpers (21) und dem jeweiligen Aufnahmeraum (22) erstreckt, wobei der erste Zugangsraum (27) einem Ende des jeweiligen Aufnahmeraums (22) und der zweite Zugangsraum (28) einem entgegengesetzten Ende des jeweiligen Aufnahmeraums (22) zugeordnet ist; und
- zumindest zwei Verriegelungselementen (20), wobei ein der zumindest zwei Verriegelungselemente (20) durch den jeweils ersten oder zweiten Zugangsraum (27, 28) in den jeweiligen Aufnahmeraum (22) schiebbar ist und das jeweilige Verriegelungselement (20) ein Arretierungselement (23) mit einer Arretierungsnase (25) aufweist, das an die Arretierungsfläche (26) des jeweiligen Basiskörpers (21) angreift zur Verhinderung eines unbeabsichtigten Herausgleitens des jeweiligen Verriegelungselements (20) aus dem zugeordneten Aufnahmeraum (22) .

2. Kopplungssystem nach Anspruch 1, bei dem das Adapterstück (1) einen Befestigungsbereich (8) aufweist mit einem scheibenförmigen ersten Kranz (6) und einem scheibenförmigen zweiten Kranz (7), wobei der erste Kranz (6) und der zweite Kranz (7) zumindest teilweise entlang des Umfangs des Adapterstücks (1) zwischen dem ersten und zweiten Ende (2, 3) verlaufen und der erste Kranz (6) einen vorgegebenen axialen Abstand zu dem zweiten Kranz (7) und einen vorgegebenen axialen Abstand zu der ersten Umfangsvertiefung (4) aufweist, wobei der zweite Kranz (7) einen vorgegebenen axialen Abstand zu der zweiten Umfangsvertiefung (5) aufweist.

3. Kopplungssystem nach einem der vorstehenden Ansprüche, bei dem der Durchlass (9) des Adapterstücks (1) einen Durchmesser zwischen 63 und 110 mm aufweist und eine Länge des Adapterstücks (1) für Durchmesser größer oder gleich 90 mm in etwa 250 mm und für Durchmesser kleiner 90 mm in einem Bereich zwischen 40 mm und 200 mm liegt, vorzugsweise in etwa 170 mm ist.

4. Kopplungssystem nach einem der vorstehenden Ansprüche, bei dem eine Wandung (10) des Adapterstücks (1) eine Dicke zwischen 6 und 10 mm aufweist.

5. Kopplungssystem nach einem der vorstehenden Ansprüche, bei dem die erste und/oder zweite Umfangsvertiefung (4, 5) des Adapterstücks (1) sich jeweils entlang eines Umfangwinkels von etwa 270° erstreckt.

6. Kopplungssystem nach einem der vorstehenden Ansprüche, bei dem das erste Ende (2) und/oder das zweite Ende (3) des Adapterstücks (1) und/oder der erste Basiskörper (21) und/oder der zweite Basiskörper (21) jeweils zumindest ein Dichtelement aufweist.

7. Kopplungssystem nach einem der vorstehenden Ansprüche, bei dem das jeweilige Verriegelungselement (20) Kunststoff und/oder Metall umfasst und/oder als Schnur, als flexible Welle, als Kette oder als Litze ausgebildet ist.

8. Kopplungssystem nach einem der vorstehenden Ansprüche, bei dem sich der Aufnahmeraum (22) über einen Umfangswinkel von etwa 270° erstreckt und bei dem der erste und zweite Zugangsraum (27, 28) außen an dem jeweiligen Basiskörper (21) in zwei in etwa rechtwinkelig zu einander angeordneten Flächen enden, von denen eine die Arretierungsfläche (26) ist.

9. Verteiler umfassend zumindest ein Kopplungssystem nach einem der Ansprüche 1 bis 8, bei dem der erste und zweite Basiskörper (21) jeweils als Fluidverteilerkörper (34) ausgebildet ist.

10. Rohrsystem umfassend zumindest ein Kopplungssystem nach einem der Ansprüche 1 bis 8, bei dem der erste und zweite Basiskörper (21) mit jeweils einem vorgegebenen Rohr (40) hydraulisch gekoppelt sind und das Rohrsystem mittels zumindest einer Fixierschelle (32) fixierbar ist, die an den Befestigungsbereich (8) des jeweiligen Adapterstücks (1) angreift.

11. Rohrsystem nach Anspruch 10, bei dem der erste und/oder zweite Basiskörper (21) jeweils als Winkelstück ausgebildet ist.

12. Rohrversetzsystem umfassend ein Kopplungssystem gemäß einem der Ansprüche 4 bis 8 wenn abhängig von Anspruch 3, bei dem der erste und zweite Basiskörper (21) jeweils als 45°-Winkelkörper ausgebildet ist und der erste Basiskörper (21) einer ersten Rohr-Installationsebene (IL1) und der zweite Basiskörper (21) einer zweiten Rohr-Installationsebene (IL2) zugeordnet ist.

## Claims

1. A coupling system for the coupling of pipes by means of basic bodies and an adapter piece, with:
- a first base body (21) and a second base body (21), wherein both in each case comprise a passage for a fluid and in each case one internal, predetermined circumferential recess and in each case one arresting surface (26),
- the adapter piece (1) with a longitudinal axis (L) and an axially-extending passage (9) for the fluid und an with a first end (2) and with an opposite second end (3), wherein the first end (2) comprises at least one predetermined first circumferential recess (4) which extends at least in part along a circumference of the first end (2), and the second end (3) comprises at least one predetermined second circumferential recess (5) which extends at least in part along a circumference of the second end (3), wherein the first base body (21) is assigned to the first end (2) of the adapter piece (1) and the second base body (21) is assigned to the second end (3) of the adapter piece (1), wherein the circumferential recess (4, 5) assigned to the respective end (2, 3) of the adapter piece (1) and the interior circumferential recess of the respective base body (21) are opposite to each other in a state wherein one is inserted into the other and form a receiving space (22), wherein the first and second base bodies (21) each comprise at least a first and a second access space (27, 28), wherein the respective access space (27, 28) extends between an outer surface of the respective base body (21) and the respective receiving space (22), wherein the first access space (27) is assigned to one end of the respective receiving space (22) and the second access space (28) is assigned to an opposite end of the respective receiving space (22); and
- at least two latching elements (20), wherein one of the at least two latching elements (20), through the respective first or second access space (27, 28), can be inserted into the respective receiving space (22), and the respective latching element (20) comprises an arresting element (23) with an arresting catch (25), which engages on the arresting surface (26) of the respective base body (21) to prevent the respective latching element (20) from accidentally sliding out of the assigned receiving space (22).

2. The coupling system according to claim 1, in which the adapter piece (1) comprises an attachment region (8) having a disc-shaped first rim (6) and a disc-shaped second rim (7), wherein the first rim (6) and second rim (7) extend at least partially along the circumference of the adapter piece (1) between the first and second end (2, 3), and the first rim (6) has a predetermined axial spacing from the second rim (7) and a predetermined axial spacing from the first circumferential recess (4), wherein the second rim (7) has a predetermined axial spacing from the second circumferential recess (5).

3. The coupling system according to one of the preceding claims, in which the aperture (9) of the adapter piece (11) has a diameter between 63 and 110 mm, and a length of the adapter piece (1) is approximately 250 mm for diameters greater than or equal to 90 mm, and is in the range between 40 mm and 200 mm, preferably approx. 170 mm, for diameters of less than 90 mm.

4. The coupling system according to one of the preceding claims, in which a wall (10) of the adapter piece (1) has a thickness between 6 and 10 mm.

5. The coupling system according to one of the preceding claims, in which the first and/or second circumferential recess (4, 5) of the adapter piece (1) respectively extend along a circumferential angle of approx. 270°.

6. The coupling system according to one of the preceding claims, in which the first end (2) and/or second end (3) of the adapter piece (1) and/or the first base body (21) and/or the second base body (21) each comprise at least one sealing element.

7. The coupling system according to one of the preceding claims, in which the respective latching element (20) comprises plastic and/or metal and/or is implemented as a cord, flexible shaft, chain, or strand.

8. The coupling system according to one of the preceding claims, in which the receiving space (22) extends over a circumferential angle of approx. 270°, and in which the respective first and second access space (27, 28) end in two surfaces disposed at approximately right angles to each other on the outside of the respective base body (21), with one of these surfaces being the arresting surface (26).

9. A distributor including at least one coupling system according to one of claims 1 to 8, in which the first and second base body (21) are respectively formed as a fluid distributing body (34).

10. A pipeline system comprising at least one coupling system according to one of claims 1 to 8, in which the first and second base body (21) are respectively hydraulically coupled to in each case one predetermined pipe (40), and the pipeline system can be fixed by means of at least one fixing collar (32) engaging on the mounting area (8) of the respective adapter piece (1).

11. The pipeline system according to claim 10, wherein the first and/or second base body (21) are respectively implemented as elbow pieces.

12. A pipe offset system including a coupling system according to one of claims 4 to 8, if dependent on claim 3, in which the first and second base bodies (21) are respectively implemented as an 45° angular body, and the first base body (21) is assigned to a first pipe installation plane (IL1), and the second base body (21) is assigned to a second pipe installation plane (IL2).

## Revendications

1. Système de raccordement pour raccorder des tuyaux au moyen de corps de base et d'un adaptateur, comprenant
- un premier corps de base (21) et un deuxième corps de base (21), chacun d'eux étant pourvu d'un passage pour un fluide, d'une cavité périphérique intérieure prédéfinie et d'une surface d'arrêt (26),
- l'adaptateur (1) avec un axe longitudinal (L) et doté d'un passage (9) pour le fluide s'étendant axialement et comportant une première extrémité (2) et une deuxième extrémité faisant face à la première, la première extrémité (2) présentant au moins une première cavité périphérique (4) prédéfinie s'étirant, au moins en partie, le long d'un pourtour de la première extrémité (2), et la deuxième extrémité (3) comportant au moins une cavité périphérique (5) prédéfinie s'étirant, au moins en partie, le long d'un pourtour de la deuxième extrémité (3), le premier corps de base (21) étant associé à la première extrémité (2) de l'adaptateur (1) et le deuxième corps de base (21) étant associé à la deuxième extrémité (3) de l'adaptateur (1), la cavité périphérique (4, 5) associée à l'extrémité (2, 3) respective de l'adaptateur (1) et la cavité périphérique intérieure du corps de base (21) respectif se faisant face lorsqu'elles sont emboîtées l'une dans l'autre et formant un espace de réception (22), le premier et le deuxième corps de base (21) comportant chacun au moins un premier et un deuxième espace d'accès (27, 28), l'espace d'accès (27, 28) respectif s'étendant entre une surface extérieure du corps de base (21) respectif et l'espace de réception (22) respectif, le premier espace d'accès (27) étant associé à une extrémité de l'espace de réception (22) respectif et le deuxième espace d'accès (28) étant associé à une extrémité opposée de l'espace de réception (22) respectif ; et
- au moins deux éléments de verrouillage (20), l'un des au moins deux éléments de verrouillage (20) pouvant être poussé à travers le premier ou le deuxième espace d'accès (27, 28) dans l'espace de réception (22) respectif et l'élément de verrouillage (20) respectif présentant un élément d'arrêt (23) avec une patte d'arrêt (25) qui vient en prise avec la surface d'arrêt (26) du corps de base (21) respectif pour empêcher tout glissement intempestif de l'élément de verrouillage (20) respectif hors de l'espace de réception (22) associé.

2. Système de raccordement selon la revendication 1, dans lequel l'adaptateur (1) présente une zone de fixation (8) avec une première couronne (6) en forme de disque et une deuxième couronne (7) en forme de disque, la première couronne (6) et la deuxième couronne (7) étant agencées, au moins en partie, le long du pourtour de l'adaptateur (1) entre la première et la deuxième extrémité (2, 3), la première couronne (6) présentant un écart axial prédéfini par rapport à la deuxième couronne (7) et un écart axial prédéfini par rapport à la première cavité périphérique (4), la deuxième couronne (7) présentant un écart axial prédéfini par rapport à la deuxième cavité périphérique (5).

3. Système de raccordement selon l'une quelconque des revendications précédentes, dans lequel le passage (9) de l'adaptateur (1) présente un diamètre compris entre 63 et 110 mm et une longueur de l'adaptateur (1) d'environ 250 mm pour des diamètres supérieurs ou égaux à 90 mm et dans une plage allant de 40 à 200 mm, de préférence est d'environ 170 mm, pour des diamètres inférieurs à 90 mm.

4. Système de raccordement selon l'une quelconque des revendications précédentes, dans lequel une paroi (10) de l'adaptateur (1) présente une épaisseur comprise entre 6 et 10 mm.

5. Système de raccordement selon l'une quelconque des revendications précédentes, dans lequel la première et/ou la deuxième cavité périphérique (4, 5) de l'adaptateur (1) s'étend respectivement le long d'un angle circonférentiel d'environ 270°.

6. Système de raccordement selon l'une quelconque des revendications précédentes, dans lequel la première extrémité (2) et/ou la deuxième extrémité (3) de l'adaptateur (1) et/ou le premier corps de base (21) et/ou le deuxième corps de base (21) présentent chacun au moins un élément d'étanchéité.

7. Système de raccordement selon l'une quelconque des revendications précédentes, dans lequel l'élément de verrouillage (20) respectif comprend du plastique et/ou du métal et/ou est conçu comme un cordon, une tige flexible, une chaîne ou un toron.

8. Système de raccordement selon l'une quelconque des revendications précédentes, dans lequel l'espace de réception (22) s'étend sur un angle circonférentiel d'environ 270° et en ce que le premier et le deuxième espace d'accès (27, 28) à l'extérieur sur le corps de base (21) respectif se terminent dans deux surfaces disposées approximativement à angle droit l'une par rapport à l'autre, dont l'une est la surface d'arrêt (26) .

9. Distributeur comprenant au moins un système de raccordement selon l'une quelconque des revendications 1 à 8, **caractérisé en ce que** le premier et le deuxième corps de base (21) sont respectivement conçus comme des corps distributeurs de fluides (34).

10. Système de conduites comprenant au moins un système de raccordement selon l'une quelconque des revendications 1 à 8, **caractérisé en ce que** le premier et le deuxième corps de base (21) sont couplés hydrauliquement avec un respective tuyau prédéfini (40) et **en ce que** le système de conduites peut être fixé avec au moins un collier de fixation (32) qui vient en prise avec la zone de fixation (8) de l'adaptateur respective (1).

11. Système de conduites selon la revendication 10, dans lequel le premier et/ou le deuxième corps de base (21) est respectivement conçu comme une pièce coudée.

12. Système de montage en déport de conduites comprenant un système de raccordement selon l'une quelconque des revendications 4 à 8, lorsqu'elles dépendent de la revendication 3, **caractérisé en ce que** le premier et le deuxième corps de base (21) sont respectivement conçus comme des corps angulaires à 45° et **en ce que** le premier corps de base (21) est associé à un premier niveau d'installation des tuyaux (IL1) et le deuxième corps de base (21) à un deuxième niveau d'installation des tuyaux (IL2) .
